# EUROPÄISCHE PATENTSCHRIFT

(11) **EP 2 869 031 B1**
(45) Veröffentlichungstag und Bekanntmachung des Hinweises auf die Patenterteilung: **03.05.2017**
(21) Anmeldenummer: 14183644.5
(22) Anmeldetag: 05.09.2014
(51) Int. Cl.: G01D 5/347

(54) **Positionsmesseinrichtung**
Position measuring device
Dispositif de mesure de position

(30) Priorität: 31.10.2013 DE 102013222197
(43) Veröffentlichungstag der Anmeldung: 06.05.2015
(73) Patentinhaber: Dr. Johannes Heidenhain GmbH, 83301 Traunreut (DE)
(72) Erfinder: Kreuzer, Stephan, 83362 Surberg-Ettendorf (DE)

(56) Entgegenhaltungen:
- EP-A2- 0 501 453
- WO-A1-88/02848
- JP-A- 2007 071 732
- US-A- 4 947 166

## Beschreibung

Die Erfindung betrifft eine Positionsmesseinrichtung zur Bestimmung der relativen Lage mindestens zweier Objekte entlang einer Messrichtung nach dem Oberbegriff des Anspruchs 1. Die Messrichtung kann dabei geradlinig oder gekrümmt sein.

Eine derartige Positionsmesseinrichtung umfasst eine von einer Abtasteinheit abzutastende Maßverkörperung, die mehrere, d. h. mindestens zwei, entlang der Messrichtung hintereinander angeordneter Codespuren mit jeweils einer bestimmten Länge in Messrichtung und mit einer absoluten Codierung aufweist. Zusätzlich weist die Maßverkörperung eine Zusatzcodierung auf, durch deren Abtastung mittels einer weiteren Abtasteinheit bestimmbar ist, welche der mehreren Codespuren aktuell von der Abtasteinheit erfasst wird.

Bei den mehreren Codespuren mit absoluter Codierung handelt es sich jeweils um eine Codespur, bei deren Abtastung mittels einer Abtasteinheit die Lage der besagten Abtasteinheit bezüglich der jeweiligen Codespur unmittelbar durch die bei der Abtastung gewonnenen Positionsmesswerte ermittelbar ist. Dies unterscheidet eine Codespur mit absoluter Codierung von einer Inkrementalspur, durch deren Abtastung lediglich eine Änderung der aktuellen Position der Abtasteinheit bezüglich der zugeordneten Messteilung erfassbar ist. Die durch Abtastung einer Inkrementalspur ermittelten Positionsänderungen müssen daher auf einen Referenzwert bezogen werden, um hieraus die aktuelle Lage der Abtasteinheit bezüglich der zugeordneten Messteilung bestimmen zu können.

Während inkrementale Messteilungen, z. B. in Form einer periodischen Anordnung von Codeelementen, in beliebiger Länge herstellbar sind, kann die maximal erreichbare Länge einer absolut codierten Spur entlang der Messrichtung - in Abhängigkeit von der verwendeten Codierung - begrenzt sein. Ein Beispiel für eine Codierung, bei welcher der abtastbare Messbereich begrenzt ist, ist ein Pseudozufallscode ("Pseudo Random Code" bzw. PRC). Zur Vergrößerung des Messbereichs einer Maßverkörperung, die zumindest entlang einer Messrichtung als eine Codespur mit absoluter Codierung ausgeführt ist, ist es bekannt, mehrere derartige Codespuren entlang der Messrichtung hintereinander anzuordnen. Die einzelnen Codespuren können dabei insbesondere jeweils die gleiche Länge und die gleiche Codestruktur, d. h. eine übereinstimmende Folge von Codeelementen, aufweisen.

Bei einer solchen Anordnung mehrerer übereinstimmender Codespuren mit absoluter Codierung hintereinander ist die eingangs genannte Zusatzcodierung erforderlich, um jeweils feststellen zu können, welche der hintereinander angeordneten Codespuren von der zugeordneten Abtasteinheit gerade erfasst wird.

Hierzu ist es aus der JP 2007-71 732 A bekannt, neben einer Maßverkörperung, die eine Mehrzahl entlang einer Messrichtung hintereinander angeordneter Codespuren mit absoluter Codierung umfasst, zusätzlich eine weitere Codierung in Form einer Zusatzcodierung anzuordnen, und zwar in zusätzlichen Spuren, die seitlich neben den erstgenannten Codespuren und parallel zur Messrichtung verlaufen. Die Codespuren sowie die Zusatzcodierung sind fotoelektrisch abtastbar ausgebildet. Dies bedeutet, dass die Breite der Maßverkörperung (quer zur Messrichtung) durch die parallel zu den Codespuren angeordneten weiteren Spuren vergrößert wird, was den entsprechenden Raumbedarf der Positionsmesseinrichtung erhöht.

Gemäß der WO 88/02848 A1 ist eine kapazitive Feinmessung ergänzt durch eine räumlich daneben angeordnete fotoelektrisch abtastbare Gray-Codierung.

Die EP 0 501 453 A2 offenbart eine inkrementale fotoelektrische Feinmessung kombiniert mit einer inkrementalen kapazitiven Grobmessung. Das Muster für die kapazitive Grobmessung enthält dabei das regelmäßige Muster für die fotoelektrische Feinmessung.

Der Erfindung liegt das Problem zugrunde, eine Positionsmesseinrichtung der eingangs genannten Art weiter zu verbessern.

Dieses Problem wird erfindungsgemäß durch die Schaffung einer Positionsmesseinrichtung mit den Merkmalen des Anspruchs 1 gelöst.

Danach sind bei einer gattungsgemäßen Positionsmesseinrichtung die hintereinander angeordneten Codespuren der Maßverkörperung und die separat hiervon gebildete Zusatzcodierung so angeordnet, dass sie einander überlappen, wobei die erstgenannten Codespuren einerseits und die Zusatzcodierung andererseits nach unterschiedlichen Abtastprinzipien abzutasten sind, nämlich die Codespuren nach dem fotoelektrischen Abtastprinzip und die Zusatzcodierung nach dem magnetischen, dem induktiven oder dem kapazitiven Abtastprinzip.

Dass die Codespuren der Maßverkörperung einerseits und die Zusatzcodierung andererseits einander überlappen, bedeutet dabei, dass diese nicht - wie im Stand der Technik - einfach nebeneinander angeordnet sind, sondern quer zur Messrichtung sowie in Messrichtung zumindest abschnittsweise übereinander. Unter einer Anordnung der Codespuren und der Zusatzcodierung übereinander wird dabei Folgendes verstanden: Sowohl die Codespuren als auch die Zusatzcodierung definieren jeweils eine Messfläche. Diese wird aufgespannt durch die Messrichtung, entlang welcher die jeweilige Codespur bzw. die Zusatzcodierung abtastbar ist, sowie durch eine zweite (senkrecht hierzu verlaufende) Richtung, entlang welcher sich die Codeelemente der jeweiligen Codespur bzw. der Zusatzcodierung quer zur Messrichtung erstrecken. Ein Überlapp bedeutet vor diesem Hintergrund, dass eine (lokal) senkrecht zur jeweiligen Messfläche verlaufende Gerade sowohl die Codespur als auch die Zusatzcodierung schneidet.

Die erfindungsgemäße Lösung verlangt dabei nicht zwingend einen vollständigen Überlapp. D. h., nicht jede Gerade, die senkrecht zu der Messfläche verläuft, welche von den hintereinander angeordneten Codespuren aufgespannt wird, muss zwingend auch die Zusatzcodierung schneiden. Es genügt also grundsätzlich ein partieller Überlapp.

Der erfindungsgemäß vorgesehene Überlapp zwischen den in Messrichtung hintereinander angeordneten Codespuren einerseits und der Zusatzcodierung andererseits birgt den Vorteil, dass hiermit die seitliche Ausdehnung der Anordnung entlang der von den Codeelementen der Codespuren bzw. der Zusatzcodierung aufgespannten Messfläche minimiert werden kann. Gleichzeitig besteht jedoch die Schwierigkeit, dass aufgrund jenes Überlapps das Vorhandensein der Zusatzcodierung die Messwerte bei der Abtastung der Codespuren beeinflussen könnte und umgekehrt.

Diese Schwierigkeit wird erfindungsgemäß dadurch behoben, dass die Codespuren einerseits und die Zusatzcodierung andererseits nach unterschiedlichen physikalischen Abtastprinzipien abgetastet werden.

Die Codespuren der Maßverkörperung sind dabei zur Abtastung nach dem fotoelektrischen Abtastprinzip ausgeführt (mit dem sich eine besonders hohe Positionsauflösung erreichen lässt). Die die einzelnen Codespuren bildenden Codeelemente bestehen dann beispielsweise aus in Messrichtung hintereinander angeordnete Teilungsstrichen mit dazwischen befindlichen Lücken, welche sich durch eine Lichtquelle der zugeordneten Abtasteinheit abtasten lassen, wobei die bei der Abtastung erzeugten (durch die jeweilige Codespur modifizierten) Lichtsignale anschließend in elektrische Signale gewandelt werden. Die Abtasteinheit zur Abtastung der Codespuren umfasst zumindest eine Lichtquelle sowie einen Fotodetektor.

Die Zusatzcodierung ist für eine Abtastung nach dem magnetischen, induktiven oder kapazitiven Prinzip ausgeführt. Sie kann beispielsweise entlang der Messrichtung hintereinander angeordnete Bereiche unterschiedlicher Magnetisierung umfassen, die jeweils einen Codezustand definieren, welcher einen Hinweis darauf enthält, welche der Codespuren aktuell von der zu deren Abtastung vorgesehenen Abtasteinheit erfasst wird. Die Abtasteinheit zur Abtastung der Zusatzcodierung umfasst bei dem magnetischen Abtastprinzip zumindest einen magnetfeldempfindlichen Detektor, bei dem induktiven Abtastprinzip eine Detektorspule und bei dem kapazitiven Abtastprinzip eine dafür angepassten Detektor.

Die Ausbildung der Codespuren derart, dass diese nach dem fotoelektrischen Abtastprinzip abtastbar sind hat den Vorteil, dass damit innerhalb der Länge einer Codespur eine hochpräzise Positionsbestimmung mit möglichst vielen unterschiedlichen absoluten Positionen ermöglicht wird. Da mit der Zusatzcodierung nur die mehreren Codespuren voneinander unterscheidbar sein müssen, ist die Zusatzcodierung nach dem magnetischen, dem induktiven oder dem kapazitiven Abtastprinzip ausgeführt.

Durch die Verwendung zweier unterschiedlicher physikalischer Abtastprinzipien zur Abtastung zweier einander überlappender Messteilungen - nämlich der in Messrichtung hintereinander angeordneten Codespuren einerseits und der Zusatzcodierung andererseits - lässt sich erreichen, dass die durch Abtastung jeweils einer der beiden genannten Messteilungen vorgenommenen Positionsmessungen nicht durch die Gegenwart der hiermit überlappenden, jeweils anderen Messteilung beeinflusst werden.

Die entlang der (jeweiligen) Messrichtung hintereinander angeordneten Codespuren einerseits sowie die Zusatzcodierung andererseits können dabei in einer Ausführungsform der Erfindung einander überlappend (übereinander) auf einem gemeinsamen Träger, wie z. B. einem Stahlband, aufgebracht sein, wobei jener Träger vorteilhaft einstückig über den gesamten Messbereich entlang der Messrichtung verläuft. Nach einer anderen Ausführungsform kann jeder der hintereinander angeordneten Codespuren ein eigener Träger zugeordnet sein, welcher jeweils weiterhin eine Zusatzcodierung trägt, anhand welcher die einzelnen Codespuren (mit jeweils identischer Codierung) unterscheidbar sind. Die einzelnen Träger werden dann zur Bildung der Maßverkörperung insgesamt zusammengesetzt und miteinander verbunden.

Gemäß einer Ausgestaltung der Erfindung haben die einzelnen Codespuren jeweils die gleiche Länge in Messrichtung; und sie können insbesondere jeweils die gleiche Codestruktur, d. h. jeweils dieselbe Abfolge von Codeelementen in Messrichtung, aufweisen.

Die absolute Codierung der in Messrichtung hintereinander angeordneten Codespuren kann z.B. durch einen Pseudozufallscode ("Pseudo Random-Code" bzw. PRC) definiert werden.

Gemäß einer Weiterbildung der Erfindung kann die Zusatzcodierung so ausgeführt sein, dass hiermit nicht nur die einzelnen hintereinander angeordneten Codespuren unterscheidbar sind, sondern dass darüber hinaus auch der Anfang und das Ende einer jeweiligen Codespur unterschieden werden können. D. h., der Codierzustand der Zusatzcodierung wechselt entlang der Länge einer jeweiligen Codespur in Messrichtung zumindest einmal. Dadurch lässt sich erreichen, dass auch bei einem toleranzbedingten (geringfügigen) Versatz der Zusatzcodierung bezüglich der Codespur jeweils eindeutig feststellbar ist, welche Codespur aktuell von der zugeordneten Abtasteinheit abgetastet wird.

Wird die Zusatzcodierung durch eine in Messrichtung verlaufende Abfolge unterschiedlicher Codierungszustände gebildet, so bedeutet dies konkret, dass sich der Codierzustand der Zusatzcodierung am Anfang einer jeweiligen Codespur vom Codierzustand der Zusatzcodierung am Ende der Codespur unterscheidet. Letzteres lässt sich in einfacher Weise dadurch realisieren, dass die einzelnen Codierzustände der Zusatzcodierung entlang der Messrichtung kürzer sind als die Länge der Codespuren entlang jener Richtung. Besonders einfach ist eine Realisierung, bei der die Ausdehnung eines Codierzustandes der Zusatzcodierung entlang der Messrichtung jeweils die Hälfte der Länge einer jeweiligen Codespur beträgt.

Weitere Einzelheiten und Vorteile der Erfindung werden bei der nachfolgenden Beschreibung von Ausführungsbeispielen anhand der Figuren deutlich werden.

Es zeigen:
- Fig. 1A: eine schematische Darstellung eines Ausschnittes einer mehrere hintereinander angeordnete Codespuren umfassenden Maßverkörperung und einer hiermit überlappenden Zusatzcodierung sowie einer zugeordneten Abtasteinrichtung;
- Fig. 1B: einen Schnitt durch die Anordnung aus Figur 1A;
- Fig. 2: eine schematische Darstellung einer Positionsmessung mit einer Anordnung basierend auf den Figuren 1A und 1 B;
- Fig.3: eine Darstellung gemäß Figur 2, jedoch unter Einbeziehung eines möglichen Versatzes zwischen den Codespuren der Maßverkörperung und der Zusatzcodierung;
- Fig.4: eine gegenüber Figur 2 abgewandelte Darstellung zur Vermeidung von Messfehlern als Folge eines Versatzes zwischen den hintereinander angeordneten Codespuren der Maßverkörperung und der Zusatzcodierung.

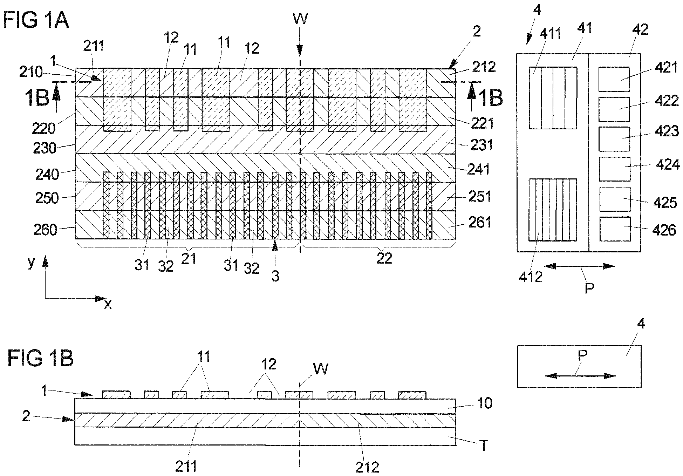

Figur 1A und 1B zeigen schematisch einen Ausschnitt einer Maßverkörperung 1, die eine Mehrzahl (mindestens zwei) entlang einer Messrichtung x hintereinander angeordneter Codespuren mit absoluter Codierung umfassen soll. Die einzelnen Codespuren werden jeweils gebildet durch Codeelemente 11, 12, welche sich in einer durch die Messrichtung x und durch eine weitere Richtung y aufgespannten Messfläche (hier in Form einer Messebene) erstrecken und welche entlang der Messrichtung x hintereinander angeordnet sind.

Die Codeelemente 11, 12 können z.B. durch (unterschiedliche breite) Teilungsstriche mit dazwischen befindlichen (unterschiedlich breiten) Lücken (auf einem Trägermaterial 10) gebildet werden und für eine fotoelektrische Abtastung mittels einer Abtasteinheit vorgesehen sein.

Die einzelnen Codeelemente 11, 12 sind dabei konkret derart angeordnet und ausgebildet, dass durch deren Abtastung mittels einer zugeordneten Abtasteinheit absolute Positionsinformationen generiert werden kann. D. h., durch Abtastung einer bestimmten Stelle der Maßverkörperung 1 entlang der Messrichtung x mittels einer zugeordneten Abtasteinheit lässt sich unmittelbar die Lage jener Abtasteinheit bezüglich der Maßverkörperung 1 entlang der Messrichtung x bestimmen. Hierzu bilden die Codeelemente 11, 12 eine nicht-periodische Struktur mit entlang der Messrichtung x variierender Ausdehnung der einzelnen Codeelemente 11, 12. Eine derartige Codespur kann beispielsweise mittels eines Pseudozufallscodes ("Pseudo Random Code" bzw. PRC) generiert werden.

Hierbei besteht allerdings das Problem, dass die Länge derartiger Codespuren mit absoluter Codierung begrenzt ist. D. h., mit einer auf einer PRC-Sequenz oder einem vergleichbaren Code basierenden Maßverkörperung ist lediglich ein begrenzter Messbereich absolut codierbar.

Um eine solche Längenlimitierung zu überwinden, werden entlang der Messrichtung mehrere Codespuren hintereinander angeordnet, wobei diese üblicherweise jeweils dieselbe Länge und dieselbe Codestruktur aufweisen. D. h., die einzelnen Codespuren bestehen jeweils aus einer übereinstimmenden Abfolge von Codeelementen.

Um durch Abtastung einer solchen Maßverkörperung Positionsmesswerte mit absoluter Positionsinformation generieren zu können, ist es erforderlich, dass bei Abtastung der Maßverkörperung feststellbar ist, welche der mehreren hintereinander angeordneten (übereinstimmenden) Codespuren jeweils aktuell von der zugehörigen Abtasteinheit erfasst wird. Hierfür dient gemäß Figur 1A eine Zusatzcodierung 2, die eine Mehrzahl entlang der Messrichtung x hintereinander angeordneter Codierzustände 21, 22 definiert.

Zur Definition dieser Codierzustände weist die Zusatzcodierung 2 mehrere, vorliegend sechs, jeweils entlang der Messrichtung x erstreckte und quer zu der Messrichtung (entlang der von der Maßverkörperung 1 aufgespannten Messfläche) nebeneinander angeordnete Teilspuren 210, 220, 230, 240, 250 und 260 auf.

Im Ausführungsbeispiel ist die Zusatzcodierung 2 als eine magnetische Codierung ausgeführt. Jede der Teilspuren 210 bis 260 ist dementsprechend als eine magnetische Teilspur ausgebildet, wobei die Magnetisierung einer jeweiligen Teilspur 210 bis 260 entlang der Messrichtung x (durch eine Änderung der Magnetisierungsrichtung) zwischen zwei möglichen Magnetisierungen wechseln kann (binäre magnetische Codierung). Die Binärcodierung kann beispielsweise als Gray-Code ausgeführt sein.

Zur Abtastung der Zusatzcodierung 2 (mit im Ausführungsbeispiel binärer magnetischer Codierung) können magnetische Sensoren, wie beispielsweise Hallsensoren oder AMR-, PMR- bzw. GMR-Sensoren, als Komponenten einer Abtasteinheit vorgesehen sein. Allgemein gesprochen ist die der Zusatzcodierung 2 zugeordnete Abtasteinheit so ausgeführt, dass hiermit in bekannter Weise die Abtastung einer magnetischen Codierung ermöglicht wird.

Die Zusatzcodierung 2 definiert an jeder Stelle xᵢ in Messrichtung x einen bestimmten Codierzustand. Dieser ist im Fall der in Figur 1A gezeigten magnetischen Codierung gegeben durch die Richtung der Magnetisierung der einzelnen Teilspuren 210, 220, 230, 240, 250, 260 an der betreffenden Stelle xᵢ in Messrichtung x. Bei sechs nebeneinander angeordneten Teilspuren 210 bis 260, welche als binäre magnetische Codierungen jeweils zwei unterschiedliche Magnetisierungen haben können, lassen sich insgesamt 2⁶ = 64 unterschiedliche Codierzustände erzeugen.

Allgemein gilt für eine Zusatzcodierung, die durch m parallel verlaufende Teilspuren gebildet ist, welche jeweils eine binäre Codierung (etwa entsprechend zwei möglichen unterschiedlichen Magnetisierungsrichtungen) aufweisen, dass sich hiermit maximal 2^{m} unterschiedliche Codierzustände erzeugen lassen. Damit können grundsätzlich 2^{m}, also im Ausführungsbeispiel mit m = 6 insgesamt 64, entlang der Messrichtung x hintereinander angeordnete Codespuren voneinander unterschieden werden, indem jeder der Codespuren einer der insgesamt 2^{m} Codierzustände der Zusatzcodierung zugeordnet wird.

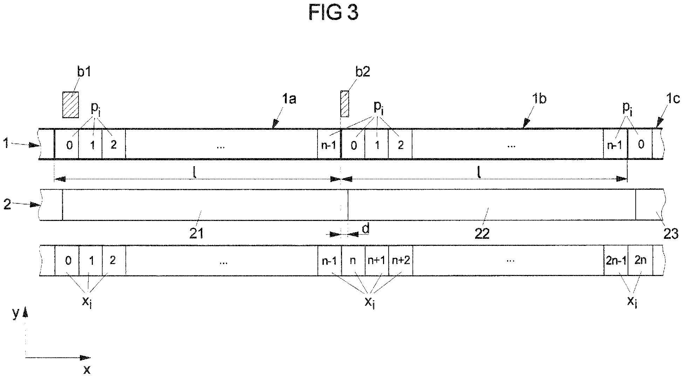

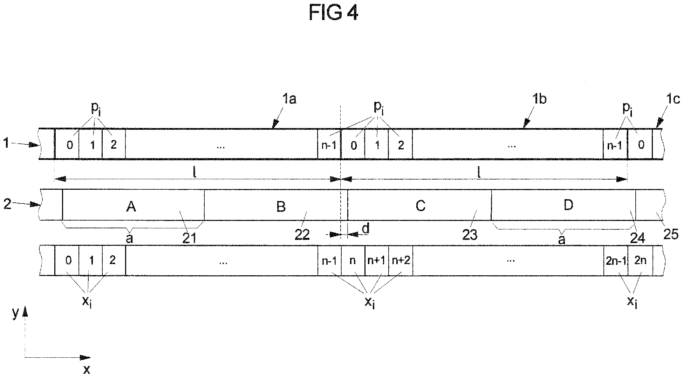

Wie weiter unten anhand der Figuren 3 und 4 gezeigt werden wird, lassen sich in der Praxis allerdings etwas weniger Codespuren anhand der Codierzustände der Zusatzcodierung unterscheiden, wenn gleichzeitig Fehler als Folge eines möglichen Versatzes der Zusatzcodierung bezüglich der Codespuren ausgeschlossen werden sollen.

Speziell bei dem Ausschnitt der Figur 1A wechselt die Magnetisierung der einen Teilspur 210 an der mit dem Pfeil W gekennzeichneten Wechselstelle von einer ersten Magnetisierung 211 zu einer zweiten Magnetisierung 212. Alle übrigen Teilspuren 220, 230, 240, 250 und 260 weisen demgegenüber in dem in Figur 1A gezeigten Ausschnitt einer Zusatzcodierung 2 jeweils durchgängig eine konstante Magnetisierung 221 bzw. 231, 241, 251 oder 261 auf.

Dementsprechend nimmt die Zusatzcodierung 2 in dem in Figur 1A gezeigten Ausschnitt entlang der Messrichtung x zwei unterschiedliche Codierzustände 21 und 22 beidseits der Wechselstelle W ein.

Durch (binäre) Variation der Magnetisierung auch der weiteren Teilspuren 220, 230, 240, 250, 260 der Zusatzcodierung 2 lassen sich entsprechend mehr unterschiedliche Codierzustände, nämlich insgesamt 2⁶ = 64 unterschiedliche Codierzustände erzeugen.

Wie insbesondere anhand einer Zusammenschau der Figur 1A mit der Querschnittsdarstellung in Figur 1B deutlich wird, überlappt die Maßverkörperung 1 mit der Zusatzcodierung 2. D. h., die Maßverkörperung 1 und die Zusatzcodierung 2 sind entlang einer Richtung z quer zu der von der Maßverkörperung 1 aufgespannten Messfläche (im Ausführungsbeispiel die xy-Ebene) übereinander angeordnet.

Es handelt sich hierbei um einen vollständigen Überlapp, weil jede lokal senkrecht zur Messfläche (xy-Ebene), also entlang der z-Achse verlaufende Gerade, welche die Maßverkörperung 1 schneidet, zugleich auch die Zusatzcodierung 2 schneidet. Anstelle dieses vollständigen Überlapps kann alternativ auch ein bloß teilweiser Überlapp zwischen der Maßverkörperung 1 und der Zusatzcodierung 2 vorgesehen sein, je nach den Anforderungen im Einzelfall.

Anhand Figur 1B wird weiter deutlich, dass die Maßverkörperung 1 und die Zusatzcodierung 2 vorliegend auf einem gemeinsamen Träger T angeordnet sind, bei dem es sich beispielsweise um ein Stahlband handeln kann und welcher sich (einstückig) entlang der gesamten Ausdehnung der Maßverkörperung 1 in Messrichtung x erstrecken kann. Bei gängigen Stahlbändern mit einer Breite (Ausdehnung in y-Richtung) von ca. 13 mm können die einzelnen Teilspuren 210, 220, 230, 240, 250, 260 der Zusatzcodierung 2 jeweils bis zu 2 mm breit sein.

Alternativ kann eine Mehrzahl einzelner Träger vorgesehen sein, deren Ausdehnung in Messrichtung x jeweils nur einem Teil der Ausdehnung der Maßverkörperung 1 in dieser Richtung entspricht und die zur Bildung der Maßverkörperung 1 (sowie der zugehörigen Zusatzcodierung 2) miteinander verbunden werden.

Anhand Figur 1A ist außerdem erkennbar, dass im Ausführungsbeispiel (optional) zusätzlich zu der (absolut codierten) Maßverkörperung 1 noch eine Inkrementalteilung 3 vorgesehen ist, welche sich neben ersterer entlang der Messrichtung x erstreckt und welche ebenfalls mit der Zusatzkodierung 2 überlappt. Die Inkrementalteilung 3 ist hier - ebenso wie die Maßverkörperung 1 - als eine fotoelektrisch abtastbare Messteilung ausgeführt; und sie umfasst entlang der Messrichtung x periodisch hintereinander angeordnete Teilungsstriche 31 mit dazwischen befindlichen Lücken 32.

Da die Maßverkörperung 1 und die Zusatzcodierung 2 vorliegend nach unterschiedlichen physikalischen Abtastprinzipien abzutasten sind, nämlich mittels des fotoelektrischen Abtastprinzips einerseits und nach einem magnetischen Abtastprinzip andererseits, kommen zur Abtastung der Maßverkörperung 1 einerseits und der Zusatzcodierung 2 andererseits unterschiedliche Abtasteinheiten zum Einsatz, die jeweils nach dem zur Abtastung der entsprechenden Messteilung 1 oder 2 vorgesehenen Abtastprinzip arbeiten. Bei einer Positionsmessung durch Abtastung der Maßverkörperung 1 sowie der Zusatzcodierung 2 mittels der jeweils zugehörigen Abtasteinheit muss die Relativbewegung der beiden Abtasteinheiten bezüglich der Maßverkörperung 1 und der Zusatzcodierung 2 derart koordiniert sein, dass durch Abtastung der Zusatzcodierung 2 jeweils ermittelbar ist, welcher Bereich der Maßverkörperung 1 (die ja aus einer Mehrzahl entlang der Messrichtung x hintereinander angeordneter Codespuren besteht) aktuell bei der Abtastung erfasst wird. Hierzu kann insbesondere vorgesehen sein, die beiden Abtasteinheiten zu einer Abtasteinrichtung, etwa in Form eines Abtastkopfes, zusammenzufassen.

Eine derartige Abtasteinrichtung 4, im Ausführungsbeispiel speziell in Form eines Abtastkopfes, mit welcher die Maßverkörperung 1 sowie die hiermit überlappende Zusatzcodierung 2 abgetastet werden können, ist in den Figuren 1A und 1B jeweils in schematischer Form mit dargestellt.

Die Abtasteinrichtung 4 umfasst zwei Abtasteinheiten 41, 42, von denen die eine Abtasteinheit 41 zur Abtastung der Maßverkörperung 1, insbesondere der hintereinander angeordneten Codespuren jener Maßverkörperung, dient und von denen die andere Abtasteinheit 42 zur Abtastung der Zusatzcodierung 2 vorgesehen ist. Die erste Abtasteinheit 41 dient darüber hinaus auch zur Abtastung der neben der Maßverkörperung 1 angeordneten Inkrementalteilung 3.

Die beiden Abtasteinheiten 41, 42 sind derart zu einer Abtasteinrichtung 4 bzw. speziell zu einem Abtastkopf zusammengefasst, dass sie im Betrieb gemeinsam entlang der Messrichtung x relativ zu der Maßverkörperung 1 und der Zusatzcodierung 2 bewegt werden. Die Richtung jener Relativbewegung ist an der Abtasteinheit 4 durch einen entsprechenden Doppelpfeil P angezeigt.

Die beiden Abtasteinheiten 41, 42 sind dabei zur Abtastung der Maßverkörperung 1 einerseits und der Zusatzcodierung 2 andererseits nach unterschiedlichen physikalischen Abtastprinzipien ausgeführt. Im Ausführungsbeispiel ist die erste Abtasteinheit 41 zur Abtastung der Maßverkörperung 1 nach dem fotoelektrischen Abtastprinzip vorgesehen; und die weitere Abtasteinheit 42 ist zur Abtastung der Zusatzcodierung 2 nach dem magnetischen Abtastprinzip ausgestaltet.

Die erste Abtasteinheit 41 umfasst zur Abtastung der hintereinander angeordneten Codespuren der Maßverkörperung 1 einen (fotoelektrischen) Detektor 411. Weiterhin ist ein entsprechender Detektor 412 zur Abtastung der Inkrementalteilung 3 vorgesehen.

Die weitere Abtasteinheit 42 umfasst zur Abtastung der Zusatzcodierung 2 magnetische Detektoren 421 bis 426. Dabei ist im Ausführungsbeispiel jeder der Teilspuren 210, 220, 230, 240, 250 und 260 der Zusatzcodierung 2 jeweils ein entsprechender Detektor 421, 422, 423, 424, 425 bzw. 426 der weiteren Abtasteinheit 42 zugeordnet.

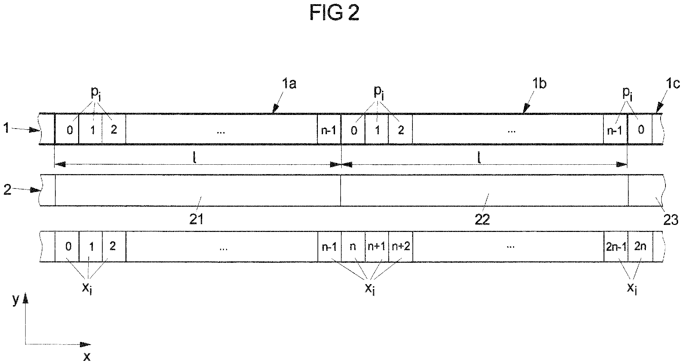

Figur 2 zeigt schematisch eine mögliche Anwendung des anhand der Figuren 1A und 1B erläuterten Messprinzips unter Nutzung einer Maßverkörperung, die eine Mehrzahl hintereinander angeordneter Codespuren umfasst und die mit einer Zusatzcodierung überlappt.

In Figur 2 sind dabei der Übersichtlichkeit halber die Maßverkörperung 1 und die Zusatzcodierung 2 räumlich nebeneinander dargestellt. Tatsächlich sollen diese beiden Messteilungen 1, 2 aber überlappen, wie in den Figuren 1A und 1B gezeigt sowie anhand dieser Figuren vorstehend beschrieben.

Gemäß Figur 2 wird die dortige Maßverkörperung 1 durch eine Mehrzahl hintereinander angeordneter Codespuren 1 a, 1 b, 1 c gebildet. Diese weisen jeweils dieselbe Länge I sowie eine übereinstimmende Grundstruktur auf. D. h., jede der in Messrichtung x hintereinander angeordneten Codespur 1 a, 1 b, 1 c weist jeweils die gleiche Abfolge von Codeelementen auf, wobei ein Ausschnitt einer derartigen Abfolge von Codeelementen 11, 12 am Beispiel einer fotoelektrisch abtastbaren Codespur in Figur 1A gezeigt ist.

Dementsprechend können mit jeder der Codespuren 1 a, 1 b, 1 c insgesamt n unterscheidbare Positionen (pᵢ = 0, 1, 2, ..., n-1) in Messrichtung x definiert werden.

Würde eine Maßverkörperung 1, die aus einer Mehrzahl hintereinander angeordneter, übereinstimmender Codespuren 1 a, 1 b, 1 c besteht, ohne Berücksichtigung der Zusatzcodierung 2 abgetastet, so könnte die zugeordnete Abtasteinheit, welche beispielsweise gerade die Position pᵢ = 1 erfasst, nicht unterscheiden, ob es sich hierbei um die entsprechende Position in der ersten Codespur 1 a, in der zweiten Codespur 1 b oder in der dritten Codespur 1 c usw. handelt. Somit ließe sich keine absolute Positionsinformation generieren, sondern vielmehr lediglich feststellen, dass die der Maßverkörperung 1 zugeordnete Abtasteinheit aktuell gerade eine bestimmte Position pᵢ an irgendeiner der hintereinander angeordneten Codespuren 1 a, 1 b, 1 c erfasst.

Mittels der anhand der Figuren 1A und 1B beschriebenen, mit den Codespuren 1 a, 1 b, 1 c der Maßverkörperung 1 überlappenden Zusatzcodierung 2 lassen sich die einzelnen Codespuren 1 a, 1 b, 1 c nun so voneinander unterscheiden, dass durch Abtastung jener Codespuren 1 a, 1 b, 1 c absolute Positionsinformationen generiert werden können.

Beim Ausführungsbeispiel der Figur 2 ist jeder Codespur 1 a, 1b und 1 c der Maßverkörperung genau ein Codierzustand 21, 22 bzw. 23 der Zusatzcodierung 2 zugeordnet. Dabei erstreckt sich der jeweilige Codierzustand 21, 22, 23 über dieselbe Länge I wie die jeweilige Codespur 1 a, 1 b oder 1 c. Genauer gesagt, verläuft der einer jeweiligen Codespur 1 a, 1 b, 1 c zugeordnete Codierzustand 21, 22 oder 23 in Messrichtung vom einen Ende (bei der Position pᵢ = 0) bis zum anderen Ende (bei der Position pᵢ = n-1) der jeweiligen Codespur. Ergibt sich also etwa durch Abtastung der Maßverkörperung 1 mittels einer zugehörigen Abtasteinheit ein bestimmter Positionswert pᵢ und durch Abtastung der Zusatzcodierung 2 mittels der zugehörigen weiteren Abtasteinheit ein bestimmter Codierzustand 21, 22 oder 23, so lässt sich hieraus eine eindeutige Absolutposition xᵢ in Messrichtung x ermitteln. Es handelt sich hierbei um die Position pᵢ an derjenigen Codespur 1 a, 1 b oder 1 c, welcher die aktuell erfasste Zusatzcodierung 21, 22 oder 23 zugeordnet ist.

Somit kann also durch Abtastung einer Maßverkörperung 1 mit mehreren entlang der Messrichtung x hintereinander angeordneten Codespuren 1a, 1 b, 1 c, welche anhand ihrer Codierung jeweils lediglich n unterscheidbare Positionen definieren, eine erheblich größere Anzahl an Positionen xᵢ unterschieden werden, wobei die Anzahl der tatsächlich unterscheidbaren Positionen xᵢ ein Vielfaches von n ist. Die maximale Anzahl an Codespuren 1a, 1b, 1c, ..., die für eine (eindeutige) Positionsmessung hintereinander angeordnet werden können, und damit das Vielfache von n, ist gegeben durch die Anzahl unterschiedlicher Codierzustände 21, 22, 23, ..., welche mittels der Zusatzcodierung 2 darstellbar sind. Bei der anhand der Figuren 1A und 1B beschriebenen Zusatzcodierung wären dies 2⁶ = 64 unterschiedliche Codierzustände.

Die resultierenden unterscheidbaren Positionswerte xᵢ sind in Figur 2 unterhalb der Maßverkörperung 1 sowie der Zusatzcodierung 2 dargestellt.

Aufgrund des vorgesehenen Überlapps zwischen der Maßverkörperung 1 mit den hintereinander angeordneten Codespuren 1 a, 1 b, 1 c einerseits und der Zusatzcodierung 2 andererseits lässt sich die vorbeschriebene Vervielfachung der Anzahl unterscheidbarer Positionen und damit der effektiven Länge des Messbereichs in Messrichtung x erreichen, ohne dass hierfür substantieller zusätzlicher Raumbedarf entlang der Richtung y quer zur Messrichtung x erforderlich wäre.

Der Überlapp zwischen der Maßverkörperung 1 mit den hintereinander angeordneten Codespuren 1 a, 1 b, 1 c, ... und der Zusatzcodierung 2 wird dabei dadurch ermöglicht, dass jene beiden Messteilungen 1, 2 nach unterschiedlichen physikalischen Messprinzipien abtastbar sind. Hierbei ist die Maßverkörperung 1 mit den hintereinander angeordneten Codespuren 1 a, 1 b, 1 c, ... nach dem (durch die Erreichbarkeit einer besonders hohen Positionsauflösung charakterisierten) fotoelektrischen Prinzip abtastbar. Die Zusatzcodierung 2 ist nach dem magnetischen, induktiven oder kapazitiven Prinzip abtastbar (welche jeweils eine überlappende Abtastung nach dem fotoelektrischen Prinzip nicht substanziell beeinflussen und umgekehrt hiervon nicht substantiell beeinflusst werden).

Figur 3 geht aus von der in Figur 2 gezeigten Konfiguration, berücksichtigt jedoch die Effekte eines möglichen, durch Fertigungs- und/oder Montagetoleranzen bedingten Versatzes d zwischen der Maßverkörperung 1 und der Zusatzcodierung 2 in Messrichtung x. Ein solcher Versatz d hat zur Folge, dass sich die einzelnen Codierzustände 21, 22, 23 der Zusatzcodierung 2 nicht jeweils exakt zwischen den Enden der zugehörigen Codespur 1 a, 1 b oder 1 c erstrecken, wie anhand Figur 3 ersichtlich. Vielmehr erstreckt sich beispielsweise bei der Anordnung gemäß Figur 3 der eine Codierzustand 21 in Messrichtung x zwar überwiegend entlang der ersten Codespur 21, jedoch teilweise auch entlang des Beginns der darauf folgenden Codespur 22. Hierdurch kann es an den Grenzen der Codespuren 21, 22, 23 dazu kommen, dass keine eindeutige Zuordnung eines Messergebnisses zu einer bestimmten Absolutposition möglich ist.

Gemäß Figur 3 überlappt beispielsweise der eine Codierzustand 21 der Zusatzcodierung 2 sowohl mit dem ersten Positionswert pᵢ = 0 der ersten Codespur 1a als auch mit dem ersten Positionswert pᵢ = 0 der daran anschließenden Codespur 1 b. Die entsprechenden Überlappungsbereiche b1 und b2 sind in Figur 3 schraffiert gezeigt. Dies bedeutet, dass bei Auswertung einer Positionsmessung ausgehend von einer Konfiguration gemäß Figur 3 (mit Versatz d zwischen Maßverkörperung 1 und Zusatzcodierung 2) nicht eindeutig unterschieden werden kann, ob einer Positionsmessung die Position pᵢ = 0 der ersten Codespur 1 a oder der in Messrichtung benachbarten Codespur 1 b entspricht.

Dieses Problem kann dadurch behoben werden, dass die Ausdehnung der Codierzustände 21, 22, 23 der Zusatzcodierung 2 in Messrichtung x kleiner gewählt wird als die Länge I der einzelnen Codespuren 1 a, 1 b, 1 c in Messrichtung x. Dies bedeutet, dass entlang einer jeden Codespur 1 a, 1 b, 1 c der Codierzustand der Zusatzcodierung 2 zumindest einmal wechselt. Dementsprechend sind die beiden (entlang der Messrichtung x voneinander beabstandeten) Enden einer jeweiligen Codespur 1 a, 1 b, 1 c anhand des jeweils zugeordneten Codierzustandes unterscheidbar. Und es kann nicht mehr der Fall auftreten, dass sich ein bestimmter Codierzustand (z. B. 21) von einem Positionswert pᵢ einer (ersten) Codespur (1a) bis zu dem entsprechenden Positionswert pᵢ einer benachbarten Codespur (1b) erstreckt.

Hierfür sollte die Ausdehnung a der Codierzustände in Messrichtung x zumindest um so viel kleiner sein als die Länge I der Codespuren 1 a, 1 b, 1 c, wie es der Ausdehnung einer Positionsinformation pᵢ auf den einzelnen Codespuren 1a, 1b, 1c entspricht. Die einzelnen Codierzustände 21, 22, 23, ... der Zusatzcodierung 2 müssen dabei nicht zwingend jeweils dieselbe Ausdehnung aufweisen.

Figur 4 zeigt ein Ausführungsbeispiel, gemäß dem die Ausdehnung a der Codierzustände 21, 22, 23, 24, 25, ... in Messrichtung x der halben Länge I/2 der Codespuren 1 a, 1 b, 1 c entlang jener Richtung x entspricht. Hierdurch ist den Positionswerten pᵢ eine jeden Codespur 1 a, 1 b, 1 c jeweils genau ein Codierzustand 21, 22, 23, 24 oder 25 zugeordnet, welcher sich nicht bis zu dem entsprechenden Positionswert pᵢ einer anderen Codespur erstrecken kann.

## Patentansprüche

1. Positionsmesseinrichtung mit
- einer Maßverkörperung (1), die mehrere entlang einer Messrichtung (x) hintereinander angeordnete Codespuren (1a, 1b, 1a) mit identischer absoluter Codierung aufweist, wobei eine jeweilige Codespur (1a, 1 b, 1 c) durch einen Pseudo-Zufallscode (PRC) gebildet wird, welche die gleiche Abfolge entlang der Messrichtung (x) hintereinander angeordneter Codeelemente (11, 12) aufweist und welche für eine Abtastung nach dem fotoelektrischen Abtastprinzip ausgeführt ist;
- einer fotoelektrischen Abtasteinheit (41) zur Abtastung;
- einer Zusatzcodierung (2), ausgeführt als eine absolute Codierung, durch deren Abtastung bestimmbar ist, welche der Codespuren (1a, 1b, 1c) aktuell von der zugehörigen fotoelektrischen Abtasteinheit (41) erfasst wird,
**dadurch gekennzeichnet,**
**dass** die Codespuren (1a, 1b, 1c) und die Zusatzcodierung (2) einander überlappen, so dass eine senkrecht zur jeweiligen Messfläche verlaufende Gerade sowohl die jeweilige Codespur (1a, 1b, 1a) als auch die Zusatzcodierung (2) schneidet, und die Zusatzcodierung (2) für eine Abtastung nach dem magnetischen, dem induktiven oder dem kapazitiven Abtastprinzip ausgeführt ist, und dass die Zusatzcodierung (2) derart ausgeführt ist, dass entlang einer jeden Codespur (1a, 1b, 1c) der Codierzustand der Zusatzcodierung (2) zumindest einmal wechselt, so dass sich hiermit in Messrichtung (x) das eine Ende (pᵢ = 0) einer jeweiligen Codespur (1a, 1 b, 1 c) von deren anderem Ende (pᵢ = n-1) unterscheiden lässt.

2. Positionsmesseinrichtung nach Anspruch 1, **dadurch gekennzeichnet, dass** den in Messrichtung (x) hintereinander angeordneten Codespuren (1 a, 1 b, 1 c) einerseits und der Zusatzcodierung (2) andererseits jeweils eine eigene Abtasteinheit (41, 42) zugeordnet ist, wobei die eine Abtasteinheit (41) dazu ausgebildet ist die Codespuren (1a, 1b, 1c) nach dem fotoelektrischen Abtastprinzip abzutasten und die weitere Abtasteinheit (42) dazu ausgebildet ist die Zusatzcodierung (2) nach dem magnetischen, dem induktiven oder dem kapazitiven Abtastprinzip abzutasten.

3. Positionsmesseinrichtung nach Anspruch 2, **dadurch gekennzeichnet, dass** die beiden Abtasteinheiten (41, 42) derart zu einer Abtasteinrichtung (4) zusammengefasst sind, dass sie bei einer Positionsmessung gemeinsam entlang der Messrichtung (x) relativ zu der Maßverkörperung (1) und der Zusatzcodierung (2) bewegt werden.

4. Positionsmesseinrichtung nach einem der vorhergehenden Ansprüche, **dadurch gekennzeichnet, dass** die Zusatzcodierung (2) durch eine in Messrichtung (x) verlaufende Abfolge unterschiedlicher Codierzustände (21, 22, 23, 24, 25) gebildet wird.

5. Positionsmesseinrichtung nach Anspruch 4, **dadurch gekennzeichnet, dass** sich der Codierzustand (21; 22) der Zusatzcodierung (2), der einem Ende (pᵢ = 0) einer jeweiligen Codespur (1a, 1b) zugeordnet ist, von dem Codierzustand (22; 23) der Zusatzcodierung (2) unterscheidet, der dem anderen Ende (pᵢ = n-1) der Codespur (1a, 1b) zugeordnet ist.

6. Positionsmesseinrichtung nach Anspruch 4 oder 5, **dadurch gekennzeichnet, dass** die Ausdehnung (a) eines jeweiligen Codierzustandes (21, 22, 23, 24, 25) der Zusatzcodierung (2) entlang der Messrichtung (x) kleiner ist als die Länge (I) der diesem Codierzustand (21, 22, 23, 24, 25) zugeordneten Codespur (1a, 1b, 1c).

## Claims

1. Position measuring device, comprising
- a scale (1) which comprises a plurality of code tracks (1a, 1b, 1c) which are arranged in succession along a measurement direction (x) and have an identical absolute code, wherein a respective code track (1a, 1b, 1c) is formed by a pseudorandom code (PRC) which has the same sequence of code elements (11, 12) arranged in succession along the measurement direction (x) and which is embodied for scanning according to the photoelectric scanning principle;
- a photoelectric scanning unit (41) for scanning;
- an additional code (2) which is embodied as an absolute code, the scanning of which renders determinable which of the code tracks (1a, 1b, 1c) is currently captured by the associated photoelectric scanning unit (41),
**characterized**
**in that** the code tracks (1a, 1b, 1c) and the additional code (2) overlap one another such that a straight line extending perpendicular to the respective measurement area intersects both the respective code track (1a, 1b, 1c) and the additional code (2) and the additional code (2) is embodied for scanning according to the magnetic, inductive or capacitive scanning principle, and in that the additional code (2) is embodied in such a way that the code state of the additional code (2) changes at least once along each code track (1a, 1b, 1c) such that, using this, the one end (pᵢ=0) of a respective code track (1a, 1b, 1c) may be distinguished from the other end (pᵢ=n-1) in the measurement direction (x).

2. Position measuring device according to Claim 1, **characterized in that** a dedicated scanning unit (41, 42) is assigned in each case to, firstly, the code tracks (1a, 1b, 1c) arranged in succession in the measurement direction (x) and, secondly, the additional code (2), wherein the one scanning unit (41) is embodied to scan the code tracks (1a, 1b, 1c) according to the photoelectric scanning principle and the further scanning unit (42) is embodied to scan the additional code (2) according to the magnetic, inductive or capacitive scanning principle.

3. Position measuring device according to Claim 2, **characterized in that** the two scanning units (41, 42) are combined to form a scanning device (4) in such a way that they are moved relative to the scale (1) and the additional code (2) along the measurement direction (x) in the case of a position measurement.

4. Position measuring device according to any one of the preceding claims, **characterized in that** the additional code (2) is formed by a sequence of different encoding states (21, 22, 23, 24, 25) extending in the measurement direction (x).

5. Position measuring device according to Claim 4, **characterized in that** the encoding state (21; 22) of the additional code (2) assigned to one end (pᵢ=0) of a respective code track (1a, 1b) differs from the encoding state (22; 23) of the additional code (2) assigned to the other end (pᵢ=n-1) of the code track (1a, 1b).

6. Position measuring device according to Claim 4 or 5, **characterized in that** the extent (a) of a respective encoding state (21, 22, 23, 24, 25) of the additional code (2) along the measurement direction (x) is less than the length (1) of the code track (1a, 1b, 1c) assigned to this encoding state (21, 22, 23, 24, 25).

## Revendications

1. Dispositif de mesure de position, comportant :
- un étalon de mesure (1) qui comporte plusieurs pistes codeuses (1a, 1b, 1c) ayant des codages absolus identiques, disposées les unes derrière les autres le long d'une direction de mesure (x), dans lequel une piste codeuse respective (1a, 1b, 1c) est formée par un code pseudoaléatoire (PRC) qui comporte la même séquence d'éléments de code (11, 12) disposés les uns derrière les autres le long de la direction de mesure (x) et qui est réalisée pour un balayage conformément au principe de balayage photoélectrique ;
- une unité de balayage photoélectrique (41) destinée à effectuer le balayage ;
- un codage auxiliaire (2), réalisé sous la forme d'un codage absolu dont le balayage permet de déterminer laquelle des pistes codeuses (1a, 1b, 1c) est actuellement détectée par l'unité de balayage photoélectrique (41) correspondante,
**caractérisé en ce que** les pistes codeuses (1a, 1b, 1c) et le codage auxiliaire (2) se chevauchent les uns les autres de manière à ce qu'une droite s'étendant perpendiculairement à la surface de mesure respective coupe à la fois la piste codeuse (1a, 1b, 1c) et le codage auxiliaire (2) et **en ce que** le codage auxiliaire (2) est réalisé pour effectuer un balayage selon le principe de balayage magnétique, par induction ou capacitif, et **en ce que** le codage auxiliaire (2) est réalisé de manière à ce que l'état de codage du codage auxiliaire (2) alterne au moins une fois le long d'une piste codeuse (1a, 1b, 1c) respective, afin qu'une extrémité (pᵢ=0) d'une piste codeuse (1a, 1b, 1c) respective puisse ainsi être différenciée de son autre extrémité (pᵢ=n-1) dans la direction de mesure (x).

2. Dispositif de mesure de position selon la revendication 1, **caractérisé en ce qu'**une unité de balayage (41, 42) propre est associée d'une part à des pistes codeuses (1a, 1b, 1c) disposées les unes derrière les autres dans la direction de mesure (x) et d'autre part, au codage auxiliaire (2), dans lequel ladite unité de balayage (41) est conçue pour balayer les pistes codeuses (1a, 1b, 1c) selon le principe de balayage photoélectrique et l'autre unité de balayage (42) est conçue pour balayer le codage auxiliaire (2) conformément au principe de balayage magnétique, par induction ou capacitif.

3. Dispositif de mesure de position selon la revendication 2, **caractérisé en ce que** les deux unités de balayage (41, 42) sont combinées en une seule unité de balayage (4) de manière à ce qu'elles soient déplacées en commun le long de la direction de mesure (x) par rapport à l'étalon de mesure (1) et au codage auxiliaire (2) lors d'une mesure de position.

4. Dispositif de mesure de position selon l'une quelconque des revendications précédentes, **caractérisé en ce que** le codage auxiliaire (2) est formé par une séquence d'états de codage (21, 22, 23, 24, 25) différents s'étendant dans la direction de mesure (x).

5. Dispositif de mesure de position selon la revendication 4, **caractérisé en ce que** l'état de codage (21 ; 22) du codage auxiliaire (2) qui est associé à une extrémité (pᵢ = 0) d'une piste codeuse (1a, 1b) respective est différent de l'état de codage (22 ; 23) du codage auxiliaire (2) qui est associé à l'autre extrémité (pi = n-1) de la piste codeuse (1a, 1b).

6. Dispositif de mesure de position selon la revendication 4 ou 5, **caractérisé en ce que** l'extension (a) d'un état de codage (21, 22, 23, 24, 25) respectif du codage auxiliaire (2) est plus petit dans la direction de mesure (x) que la longueur (1) de la piste codeuse (1a, 1b, 1c) associée audit état de codage (21, 22, 23, 24, 25).
